# EUROPÄISCHE PATENTSCHRIFT

(11) **EP 1 029 454 B1**
(45) Veröffentlichungstag und Bekanntmachung des Hinweises auf die Patenterteilung: **02.05.2003**
(21) Anmeldenummer: 00103023.8
(22) Anmeldetag: 15.02.2000
(51) Int. Cl.: A22B 5/00

(54) **Vorrichtung zur Entfernung von Teilen aus Schlachttierkörpern, insbesondere Flomen an der Innenseite von Schweinehälften**
Device for removing parts out of slaughtered animals, especially leaf fat at the inner side of pig halves
Dispositif pour enlever des parties d'animaux abattus, en particulier des pannes de l'intérieur de moitiés de porcs

(30) Priorität: 19.02.1999 DE 19906883
(43) Veröffentlichungstag der Anmeldung: 23.08.2000
(73) Patentinhaber: BVS Beratung-Verkauf-Service für die Fleischwirtschaft GmbH, 55270 Klein-Winternheim (DE)
(72) Erfinder: Kreis Armin, 55270 Klein-Winternheim (DE); Kreis Gabi, 55270 Klein-Winternheim (DE); Kreis Thomas, 55270 Ober-Olm (DE)
(74) Vertreter: Luderschmidt, Schüler & Partner GbR

(56) Entgegenhaltungen:
- EP-A- 0 836 804
- WO-A-98/15186
- DE-A- 2 626 070

## Beschreibung

Bei der Schlachtung von Schweinen und Sauen wird der Schlachttierkörper der Länge nach halbiert. Die Schlachttierkörperhälften werden über Kopf hängend transportiert, so daß sämtliche Innereien leicht entnommen werden können. Zur Entfernung der Innereien finden im allgemeinen Messer, Schaber oder dgl. Verwendung.

Aus der DE 295 12 854 U1 ist eine Vorrichtung zum Schneiden von Fleisch oder Fett mit einer ringförmigen, motorisch angetriebenen Schneidklinge bekannt. Die Vorrichtung verfügt über eine Absaugeinrichtung, um die abgetrennten Teile direkt einem Sammelbehälter zuführen zu können.

Die DE 94 05 286 U1 beschreibt eine Absaugvorrichtung für Schlachttierkörper, deren Saugdüse über ein Kratzblech verfügt, mit dem das Ablösen der Gewebeteile aus dem Tierkörper unterstützt werden soll.

Neben Innereien werden beim Schlachten von Schweinen dem Schlachttierkörper Flomen entnommen. Bei den Flomen handelt es sich um Fettlappen, die im Bauchraum an der Innenseite der Schweinehälften sitzen. Der Flomen wird mit einem Messer gelöst und von Hand aus dem Bauchraum herausgerissen, wozu ein hoher Kraftaufwand erforderlich ist, und vorschriftsmäßig aufgrund der Betriebshygiene-Verordnung entsorgt. Darüber hinaus nehmen diese Arbeitsgänge relativ viel Zeit in Anspruch.

Die WO 98/15186 beschreibt eine Vorrichtung zum Herausreißen von Fettschichten aus Schweinehälften. Die bekannte Vorrichtung besteht im wesentlichen aus einem Gestell, einem vertikal verfahrbaren Wagen und einer Greifvorrichtung an dem Wagen. Die Greifvorrichtung greift die Fettschicht und wird im Anschluß daran nach oben verfahren, so daß die Fettschicht herausgerissen wird. Nachteilig ist, daß das genaue Positionieren der Greifvorrichtung an einem Flomenzipfel mühsam und zeitaufwendig ist.

Der Erfindung liegt die Aufgabe zugrunde, eine Vorrichtung zu schaffen, mit der insbesondere Flomen aus Schweinehälften ohne hohen Kraftaufwand in kurzer Zeit maschinell entfernt werden kann, wobei die Vorrichtung einfach und schnell am Ende des Flomens positionierbar ist.

Die Lösung dieser Aufgabe erfolgt erfindungsgemäß mit den Merkmalen des Patentanspruchs 1.

Die erfindungsgemäße Vorrichtung verfügt über einen Gehäusekörper mit Mitteln zum Greifen des Flomens, wobei an dem Gehäusekörper Mittel zum Bewegen desselben aus einer ersten Position, in der der Flomen greifbar ist, in eine zweite Position vorgesehen sind. Zum Entfernen des Flomens wird die Vorrichtung an die Schweinehälften-Innenseite herangeführt, um den Fettlappen an seinem unteren Ende greifen zu können. Nachdem die Vorrichtung den Flomenzipfel erfaßt hat, bewegt sich der Gehäusekörper in die zweite Position, wodurch der Fettlappen von der Schweinehälfte losgerissen wird. Da die Bewegung des Gehäusekörpers maschinell erfolgt, ist die Entfernung des Flomens mit einem nur sehr geringen Kraftaufwand verbunden. Die Mittel zum Bewegen des Gehäusekörpers umfassen eine Kolben/Zylinderanordnung mit einer Kolbenstange, wobei die Kolbenstange an dem Gehäusekörper befestigt ist und der Zylinder an einem Befestigungspunkt angebracht wird, der oberhalb des Gehäusekörpers liegt, so daß der Gehäusekörper aufgehängt ist. Der Zylinder kann beispielsweise an einer Schiene befestigt werden, die parallel zu den über Kopf hängenden Schweinehälften verläuft. Anstelle der Kolbenstange kann auch der Zylinder an dem Gehäusekörper und anstelle des Zylinders die Kolbenstange an dem Befestigungspunkt befestigt werden. Der Gehäusekörper wird bei ausgefahrenem Kolben so aufgehängt, daß sich der untere Flomenzipfel greifen läßt, ohne den Gehäusekörper anheben zu müssen. Durch Betätigung der Kolben/Zylinderanordnung wird der Gehäusekörper nach oben gezogen, so daß der Fettlappen aus der Schweinehälfte herausgerissen wird. Prinzipiell ist es auch möglich, den Gehäusekörper von oben nach unten zu bewegen. Hierzu wäre es aber erforderlich, die Schweinehälften an ihren Füßen aufzuhängen, so daß der Flomenzipfel oben liegt. Dies ist allerdings in den Schlachthöfen nicht üblich. Die Kolben/Zylinderanordnung kann grundsätzlich sowohl pneumatisch als auch hydraulisch betrieben werden. Aufgrund der Gefahr von Verunreinigungen infolge möglicher Leckstellen ist aber einem pneumatischen Antrieb der Vorzug zu geben. Die Kolbenstange bzw. der Zylinder der Kolben/Zylinderanordnung ist mit dem Gehäusekörper beweglich verbunden.

Eine große Bewegungsfreiheit kann vorzugsweise mit einem Kardangelenk erreicht werden. Damit kann die Vorrichtung in alle Richtungen verschwenkt werden. Ein Kardangelenk kann auch an dem oberen Befestigungspunkt vorgesehen sein. Im allgemeinen ist aber hier eine pendelnde Aufhängung in nur einer Ebene ausreichend.

In einer weiteren bevorzugten Ausführungsform umfassen die Mittel zum Greifen einen Hohlkörper mit einer maulförmigen Öffnung, die mit einer Klappe verschließbar ist. Mit der Klappe kann der Flomenzipfel verklemmt werden. Dies hat sich in der Praxis als vorteilhaft erwiesen. Der Flomenzipfel kann aber auch mit einem Greifarm, der über Klauen oder dgl. verfügt, erfaßt werden.

Um den Flomenzipfel sicher greifen zu können, weist die Klappe vorteilhafterweise einen die maulförmige Öffnung des Hohlkörpers übergreifenden Rand auf. Die Klappe wird zweckmäßigerweise mit einer zweiten Kolben/Zylinderanordnung betätigt.

Aus Gründen der Betriebssicherheit und Hygiene müssen die zu entfernenden Teile aufgehoben und entsorgt werden. Daher ist an dem Hohlkörper vorteilhafterweise eine Saugleitung angeschlossen, die zu einem Sammelbehälter führt.

Für einen vollautomatischen Arbeitsablauf ist in einer weiteren bevorzugten Ausführungsform eine Hydraulik- oder Pneumatiksteuerung zur Betätigung der ersten und zweiten Kolben/Zylinderanordnung vorgesehen. Die Steuerung ist derart ausgebildet, daß zum Schließen der Klappe zunächst die zweite Kolben/Zylinderanordnung und dann zum Bewegen des Gehäusekörpers aus der ersten in die zweite Position, die erste Kolben/Zylinderanordnung betätigt wird. Nach dem Herausreißen des Flomens wird die Klappe mit der Hydraulik- oder Pneumatiksteuerung wieder automatisch in die erste Position verfahren und die Klappe wieder geöffnet werden, so daß der Flomen angesaugt und entsorgt wird.

Die Arbeitssicherheit wird vorteilhafterweise durch zwei Druckschalter erhöht, die in zwei Handgriffe an dem Gehäusekörper integriert sind. Die Hydraulik- oder Pneumatiksteuerung ist derart ausgebildet, daß die Vorrichtung nur bei der Betätigung beider Druckschalter in Gang gesetzt wird. Dadurch sind Verletzungen durch die Mittel zum Greifen des Flomens ausgeschlossen.

Im folgenden wird unter Bezugnahme auf die Zeichnungen ein Ausführungsbeispiel der Erfindung näher erläutert.

Es zeigen:
- Figur 1: ein Ausführungsbeispiel der erfindungsgemäßen Vorrichtung zusammen mit einer Schweinehälfte, aus der der Flomen zu entfernen ist,
- Figur 2: eine Seitenansicht der erfindungsgemäßen Vorrichtung in vereinfachter Darstellung, wobei die Klappe zum Greifen des Flomenzipfels geöffnet ist,

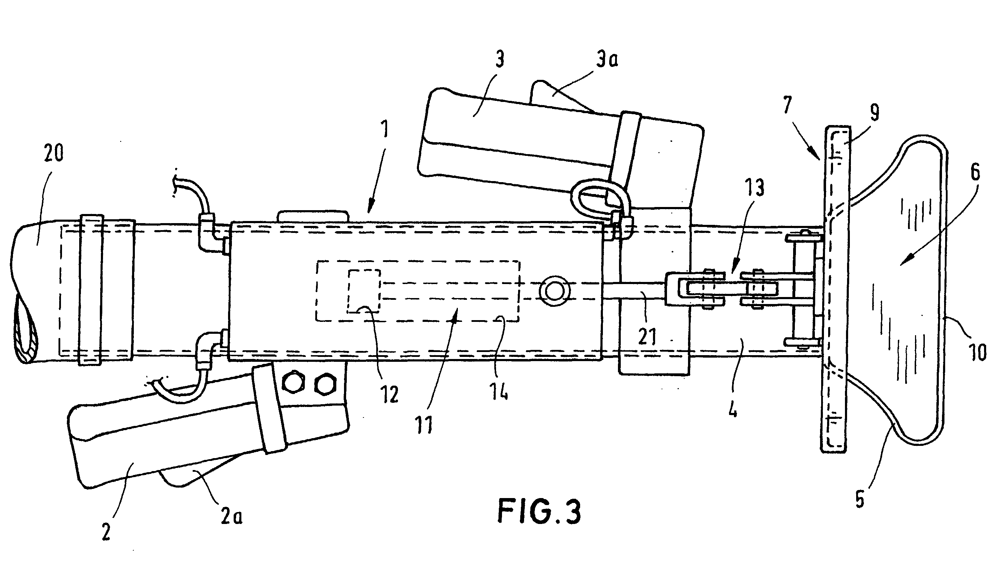

- Figur 3: eine Ansicht der Vorrichtung von Figur 2 aus der Richtung des Pfeils III,
- Figur 4: eine Ansicht der Vorrichtung von Figur 2 aus der Richtung des Pfeils IV und
- Figur 5: die Vorrichtung von Figur 2 bei geschlossener Klappe.

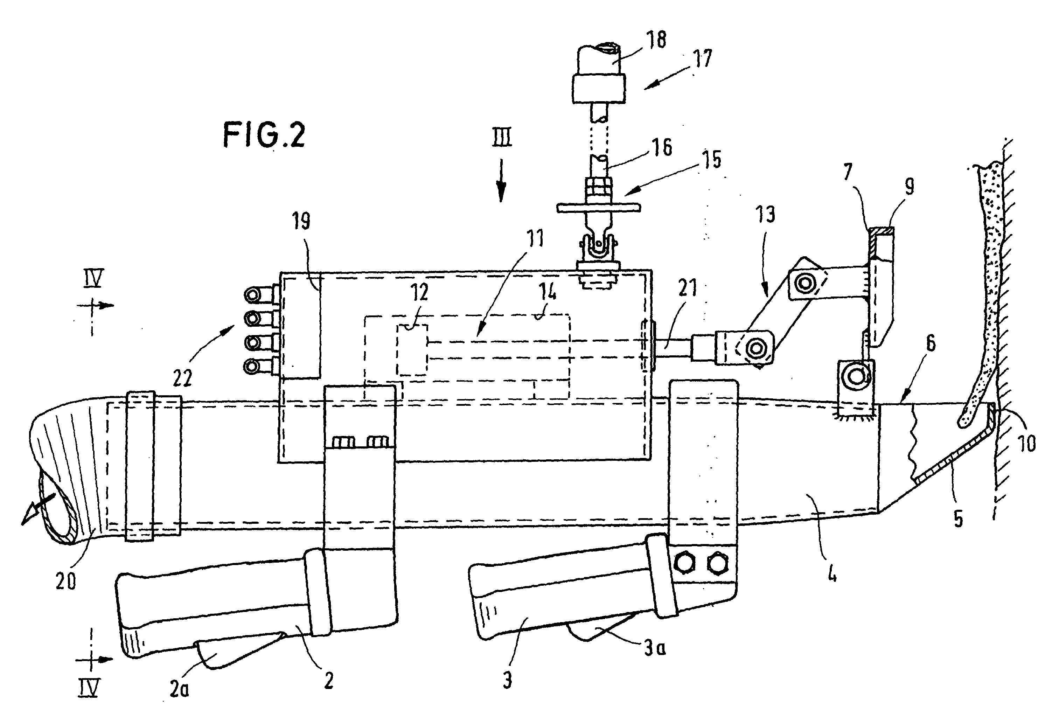

Die Vorrichtung zur Entfernung von Flomen weist einen Gehäusekörper 1 mit zwei Handgriffen 2, 3 auf, die an dessen Unterseite seitlich zueinander versetzt hintereinander angeordnet sind. Der Gehäusekörper 1 umfaßt einen langgestreckten Hohlkörper 4, der an seinem vorderen Ende in ein sich zu beiden Seite erweiterndes Ansaugstück 5 übergeht, das nach oben geöffnet ist. Zum Verschließen der maulförmigen Öffnung 6 des Ansaugstücks 5 ist eine Klappe 7 vorgesehen, die an der Oberseite des langgestreckten Hohlkörpers 4 mittels eines Lagers schwenkbar befestigt ist. Figur 2 zeigt die Vorrichtung mit geöffneter und Figur mit geschlossener Klappe 7. Die Klappe 7 weist einen umlaufenden Rand 9 auf, der in der geschlossenen Stellung den oberen Rand 10 des Ansaugstücks 5 übergreift.

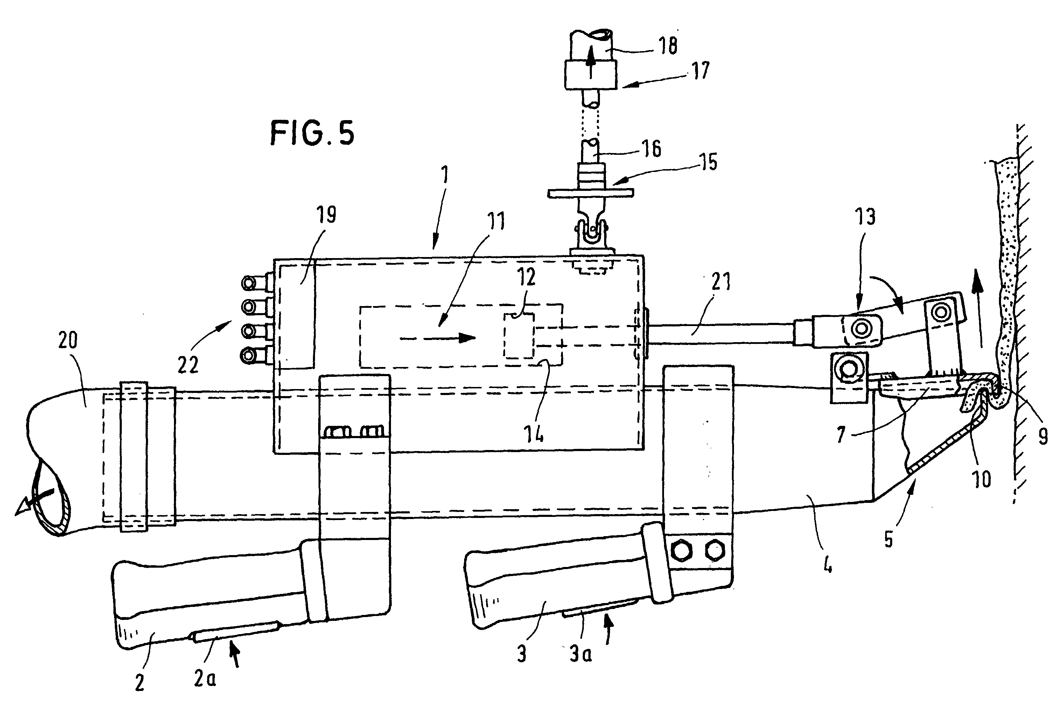

Zur Betätigung der Klappe ist in dem Gehäusekörper 1 eine nur andeutungsweise dargestellte Kolben/Zylinderanordnung 11 vorgesehen, die mit Druckluft betrieben wird. An dem Kolben 12 der Kolben/Zylinderanordnung 11 ist eine sich aus dem Gehäusekörper 1 nach vorn erstreckende Kolbenstange 21 befestigt, die über Getriebeglieder 13 mit der Klappe 7 derart verbunden ist, daß beim Vor- und Zurückschieben des Kolbens 12 in den Zylinder 14 die Klappe geschlossen (Figur 5) bzw. geöffnet (Figur 2) wird.

An der Oberseite des Gehäusekörpers 1 befindet sich ein Kardangelenk 15, das mit der Kolbenstange 16 einer Kolben/Zylinderanordnung 17 verbunden ist, deren Zylinder 18 an seinem oberen Ende mit nicht dargestellten Befestigungsmittelen zum Aufhängen desselben versehen ist. Auch diese Kolben/Zylinderanordnung 17 wird mit Druckluft betrieben.

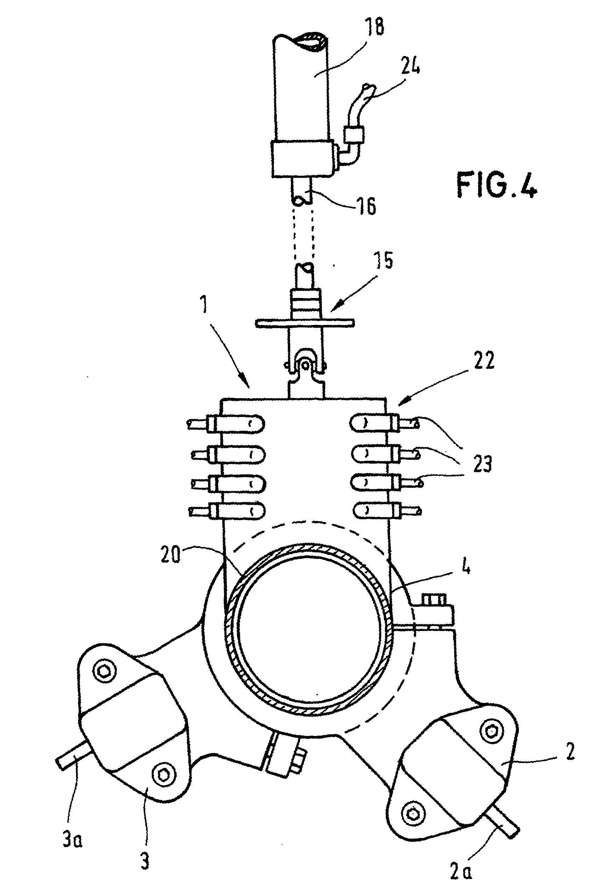

Zur Betätigung der beiden Zylinderanordnungen 11,17 ist in dem Gehäusekörper 1 eine nur andeutungsweise dargestellte Pneumatiksteuerung 19 vorgesehen, die über nicht dargestellte Druckluftleitungen mit den Kolben/Zylinderordnungen verbunden ist. Die Druckluftanschlüsse 22, an denen nur andeutungsweise dargestellte Druckluftleitungen 23, 24 angeschlossen sind, befinden sich an der Rückseite des Gehäusekörpers 1 (Figur 4).

Zum Abführen des losgerissenen Flomens ist an dem hinteren Ende des langgestreckten Hohlkörpers 4 eine Saugleitung 20 angeschlossen, die zu einem nicht dargestellten Sammelbehälter führt, der mit einer Vakuumpumpe zur Erzeugung eines Unterdrucks in Verbindung steht.

Die Vorrichtung wird mit zwei Druckschaltern 2a, 3a in Betrieb gesetzt, die in die Handgriffe 2, integriert sind. Die Pneumatiksteuerung 19 ist derart ausgebildet, daß nach der Betätigung der beiden Druckschalter 2a, 3a zunächst die Kolbenstange 21 der Kolben/Zylinderanordnung 11 zum Schließen der Klappe 7 ausgefahren, daraufhin die Kolbenstange 16 der Kolben/Zylinderanordnung 17 zum Anheben des Gehäusekörpers 1 eingezogen und anschließend die Kolbenstange 16 zum Absenken des Gehäusekörpers wieder ausgefahren und die Kolbenstange 12 zum Öffnen der Klappe 7 wieder eingezogen werden.

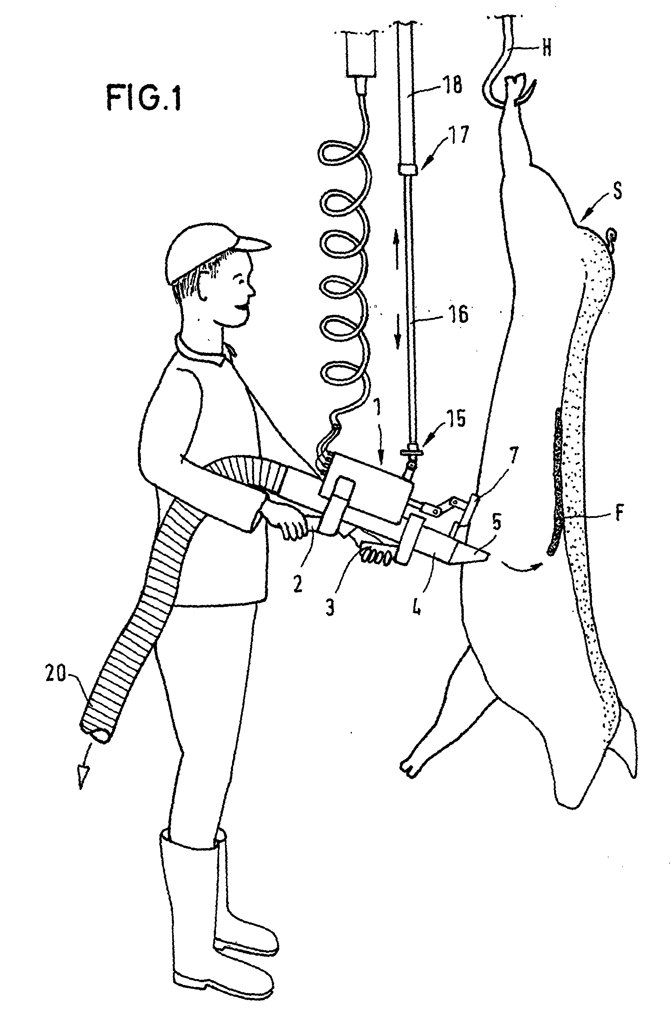

Unter Bezugnahme auf Figur 1 wird nachfolgend der Arbeitsablauf zum Entfernen des Flomens mit der erfindungsgemäßen Vorrichtung beschrieben.

Die Schweinehälften S sind über Kopf an Haken H aufgehängt, die schrittweise entlang einer Förderstrecke verfahren werden. Der Zylinder 18 der Zylinderanordnung 17 ist pendelnd an einer vor den Haken verlaufenden Schiene aufgehängt. Die Vorrichtung ist derart aufgehängt, daß sich bei ausgefahrenem Kolben 16 der Kolben/Zylinderanordnung 17 die Saugdüse 5 auf der Höhe des unteren Zipfels des Flomens F befindet. Die Vorrichtung wird mit beiden Händen an den Handgriffen 2, gehalten und zu der Schweinehälfte S geschwenkt, bis der untere Zipfel des Fettlappens in die maulförmige Öffnung 6 der Saugdüse 5 ragt (Figur 2).

Nun werden die beiden Druckschalter 2a, 3a betätigt, wodurch der Flomenzipfel zwischen dem oberen Rand 10 der Saugdüse 5 und dem Ansatz 9 der Klappe 7, der den oberen Rand 10 der Saugdüse übergreift, sicher verklemmt wird. Daraufhin wird der Gehäusekörper 1 an der Kolben/Zylinderanordnung 17 in einer relativ schnellen Bewegung automatisch nach oben gezogen. Dabei reißt die Vorrichtung den Fettlappen F aus dem Bauchraum der Schweinehälfte S heraus. Anschließend wird die Vorrichtung durch Ausfahren der Kolbenstange 16 der Kolben/Zylinderanordnung 17 wieder automatisch auf die ursprüngliche Höhe abgesenkt und die Klappe 7 wird wieder geöffnet, wodurch der Flomen aufgrund des Unterdrucks in den langgestreckten Hohlkörper 4 angesaugt und über die Saugleitung 20 in den Sammelbehälter befördert wird.

## Patentansprüche

1. Vorrichtung zur Entfernung von Teilen aus Tierkörperhälften, insbesondere Flomen an der Innenseite von Schweinehälften, mit einem Gehäusekörper (1) mit Mitteln (4, 5, 7) zum Greifen des Flomens, wobei an dem Gehäusekörper Mittel (16,17) zum Bewegen desselben aus einer ersten Position, in der der Flomen greifbar ist, in eine zweite Position, wodurch der Flomen von der Schweinehälfte losgerissen wird, vorgesehen sind, **dadurch gekennzeichnet,**
**daß** die Mittel zum Bewegen des Gehäusekörpers eine erste Kolben/Zylinderanordnung (17) mit einer Kolbenstange (16) umfassen, wobei die Kolbenstange (16) bzw. der Zylinder (17) mit dem Gehäusekörper beweglich verbunden ist, so daß die Vorrichtung in alle Richtungen verschwenkbar ist, und der Zylinder bzw. die Kolbenstange an einem ortsfesten Befestigungspunkt pendelnd befestigbar ist, der oberhalb des Gehäusekörpers liegt.

2. Vorrichtung nach Anspruch 1, **dadurch gekennzeichnet, daß** an dem Gehäusekörper (1) ein Kardangelenk (15) vorgesehen ist, mit dem die Kolbenstange (16) bzw. der Zylinder (17) befestigt ist.

3. Vorrichtung nach einem der Ansprüche 1 oder 2, **dadurch gekennzeichnet, daß** die Mittel zum Greifen einen Hohlkörper (4) mit einer Ansaugdüse (5) umfassen, die mit einer Klappe (7) verschließbar ist.

4. Vorrichtung nach Anspruch 3, **dadurch gekennzeichnet, daß** die Klappe (7) eine die Ansaugdüse (5) des Hohlkörpers (4) übergreifenden Ansatz (9) aufweist.

5. Vorrichtung nach Anspruch 3 oder 4, **dadurch gekennzeichnet, daß** an dem Hohlkörper (4) eine zu einem Sammelbehälter führende Saugleitung (20) angeschlossen ist.

6. Vorrichtung nach einem der Ansprüche 3 bis 5, **dadurch gekennzeichnet, daß** eine zweite Kolben/Zylinderanordnung (11) vorgesehen ist, mit der die Klappe (7) betätigbar ist.

7. Vorrichtung nach Anspruch 6, **dadurch gekennzeichnet, daß** eine Hydraulik- oder Pneumatiksteuerung (19) zur Betätigung der ersten und zweiten Kolben/Zylinderanordnung (17, 11) vorgesehen ist, die derart ausgebildet ist, daß zum Schließen der Klappe (7) zunächst die zweite Kolben/Zylinderanordnung (11) und dann zum Bewegen des Gehäusekörpers (1) aus der ersten in die zweite Position, die ersten Kolben/Zylinderanordnung (17) betätigt wird.

8. Vorrichtung nach Anspruch 7, **dadurch gekennzeichnet, daß** an dem Gehäusekörper (1) zwei Handgriffe (2, 3) vorgesehen sind, die jeweils mit Druckschaltern (2a, 3a) versehen sind, wobei die Hydraulik- oder Pneumatiksteuerung (19) ferner derart ausgebildet ist, daß die Vorrichtung nur bei der Betätigung beider Druckschalter in Gang setzbar ist.

## Claims

1. Device for removing parts of slaughtered animals, especially leaf fat at the inner side of pig halves, with a housing body (1) with means (4, 5, 7) for gripping the leaf fat, with the housing body being provided with means (16, 17) for moving same from a first position in which the leaf fat can be gripped to a second position whereby the leaf fat is pulled off, **characterised in that**
the means for moving the housing body has a first piston/cylinder arrangement (17) with a piston rod (16), with the piston rod (16) or cylinder (17) being hinge-connected to the housing body so that the device can be swivelled in all directions and the cylinder or piston rod can be suspended from a fixed mounting point located above the housing body.

2. Device in accordance with claim 1, **characterised in that** the housing body (1) is provided with a universal joint (15), by means of which the piston rod (16) or cylinder (17) is attached.

3. Device in accordance with one of claims 1 or 2, **characterised in that** the means for gripping has a hollow body (4) with a suction nozzle (5) that can be closed by a flap valve (7).

4. Device in accordance with claim 3, **characterised in that** the flap valve (7) has a shoulder (9) overlapping the suction nozzle (5) of the hollow body (4).

5. Device in accordance with claim 3 or 4, **characterised in that** a suction line (20) leading to a collector tank is connected to the hollow body (4).

6. Device in accordance with one of claims 3 to 5, **characterised in that** a second piston/cylinder arrangement (11) is provided by means of which the flap valve (7) can be actuated.

7. Device in accordance with claim 6, **characterised in that** a hydraulic or pneumatic control (19) for actuation of the first and second piston/cylinder arrangement (17, 11) is provided, which is designed in such a way that to close the flap valve (7) the second piston/cylinder arrangement (11) is first actuated and then, to move the housing body (1) from the first to the second position, the second piston arrangement (17) is actuated.

8. Device in accordance with claim 7, **characterised in that** two handles (2, 3) are provided on the housing body (1), each of which is provided with pressure switches (2a, 3a), with the hydraulic or pneumatic control (19) being further designed so that the device can be set in motion only by operation of both pressure switches.

## Revendications

1. Dispositif pour enlever des parties de moitiés de corps d'animaux, en particulier des pannes de l'intérieur de moitiés de porcs, à l'aide d'un corps formant carter (1) pourvu de moyens (4, 5, 7) pour saisir la panne, dans lequel des moyens (16, 17) sont prévus sur le corps formant carter pour déplacer ledit corps formant carter d'une première position dans laquelle la panne peut être saisie, à une deuxième position, dans laquelle la panne est détachée de la moitié de porc, **caractérisé en ce que**
les moyens destinés au déplacement du corps formant carter comprennent un premier agencement piston/cylindre (17) avec une tige de piston (16), dans lequel la tige de piston (16) ou le cylindre (17) est lié(e) au corps formant carter de manière à être mobile, de sorte que le dispositif est orientable dans tous les sens, et le cylindre ou la tige de piston peut être fixé(e) oscillant, de manière inamovible à un point de fixation, lequel point de fixation se situe au-dessus du corps formant carter.

2. Dispositif selon la revendication 1, **caractérisé en ce que** un joint de Cardan (15), avec lequel la tige de piston (16) ou le cylindre (17) est fixé(e), est fourni sur le corps formant carter (1).

3. Dispositif selon la revendication 1 ou 2, **caractérisé en ce que** les moyens de saisie comprennent un corps creux (4) pourvu d'une buse d'aspiration (5), qui peut être fermée par un clapet (7).

4. Dispositif selon la revendication 3, **caractérisé en ce que** le clapet (7) présente un embout (9) s'étendant sur la buse d'aspiration (5) du corps creux (4).

5. Dispositif selon la revendication 3 ou 4, **caractérisé en ce que** sur le corps creux (4) une conduite d'aspiration (20) menant à un récipient collecteur est fixée.

6. Dispositif selon l'une quelconque des revendications 3 à 5, **caractérisé en ce que** un deuxième agencement piston/cylindre (11) est prévu, avec lequel le clapet (7) est actionnable.

7. Dispositif selon la revendication 6, **caractérisé en ce que** une commande hydraulique ou pneumatique (19) pour actionner le premier et le deuxième agencement piston/cylindre (17, 11) est prévue, qui est formé de telle manière que pour fermer le clapet (7), on actionne d'abord le deuxième agencement piston/cylindre (11), puis pour déplacer le corps formant carter (1) de la première à la deuxième position, on actionne le premier agencement piston/cylindre (17).

8. Dispositif selon la revendication 7, **caractérisé en ce que** sur le corps formant carter (1) deux poignées (2, 3) sont prévues, qui sont respectivement pourvues d'interrupteurs à pression (2a, 3a), dans lequel la commande hydraulique ou pneumatique (19) est, en outre, formée de telle manière que le dispositif ne peut être mis en marche que si l'on actionne les deux interrupteurs à pression.
